Europäisches Patentamt

European Patent Office

Office européen des brevets

(19)

(11) Publication number: **0 439 359 A2**

(12) **EUROPEAN PATENT APPLICATION**

(21) Application number: 91300559.1

(51) Int. Cl.⁵: **B60R 19/04**

(22) Date of filing: 24.01.91

(30) Priority: 24.01.90 AU 8356/90

(43) Date of publication of application:
31.07.91 Bulletin 91/31

(84) Designated Contracting States:
AT BE CH DE DK ES FR GB GR IT LI LU NL SE

(71) Applicant: URETHANE MANUFACTURERS OF
AUSTRALIA PTY. LTD.
46 Wentworth Street
Granville, New South Wales 2142 (AU)

(72) Inventor: Ostin, Nicholas
11 Lochinvar Parade
Carlingford, New South Wales 2118 (AU)

(74) Representative: W.P. THOMPSON & CO.
High Holborn House, 52-54 High Holborn
London WC1V 6RY (GB)

(54) Vehicle/craft bumper.

(57) The invention provides for a bumper (10) provided in modular form which can be readily removed and reconstructed and repaired as required, the bumper comprising an elongate metal channel (11), two polymeric corner inserts (12), a polymeric central insert (13), and by the channel having guides (16) formed along its longitudinal edges; the inserts each having enlarged portions (23) along their longitudinal edges, and the guides being arranged for slideably receiving the inserts (12, 13) by retaining the enlarged portions (23) of each insert.

EP 0 439 359 A2

Fig 1

## VEHICLE/CRAFT BUMPER

The present invention relates to a vehicle/craft bumper and more particularly to a bumper adapted for a bus.

Automotive bumpers in the prior art are often heavy, costly and difficult to replace is damaged.

It is an object of the present invention to ameliorate the disadvantages of the prior art.

A modular automotive bumper is provided comprising an elongated channel and at least one polymeric insert.

In a first embodiment of the invention, the elongated channel has opposed longitudinal guides which co-operate with longitudinal ribs formed on the polymeric bumper inserts.

In a second embodiment, the inserts have formed therein one or more webs, whereby the webs co-operate with the elongated channel to create air pockets.

In a third embodiment the energy absorbing components of the bumper include two substantially identical corner bumper pieces and a central insert, wherein both the corner and central inserts further include enlarged peripheral edges which are adopted to be received by the elongated channel.

The invention is further described by way of example, wherein :

Fig. 1 is a top plan view of a modular bumper of the present invention.

Fig. 2 is a partial cross-section of a bumper of the present invention ; and

Fig. 3 is a perspective view of one embodiment of the present invention.

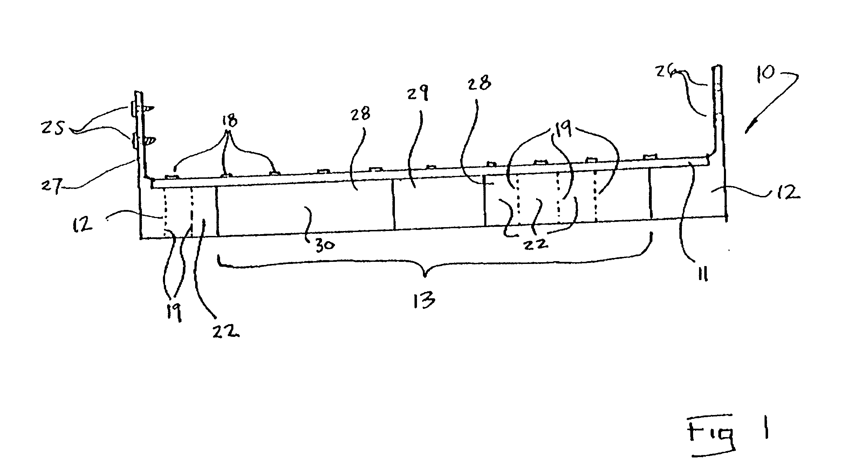

As shown in Fig. 1, the modular bumper 10 of the present invention includes an elongate metallic channel or bracket means 11, substantially similar polymeric corner or end inserts 12 and a central polymeric insert 13.

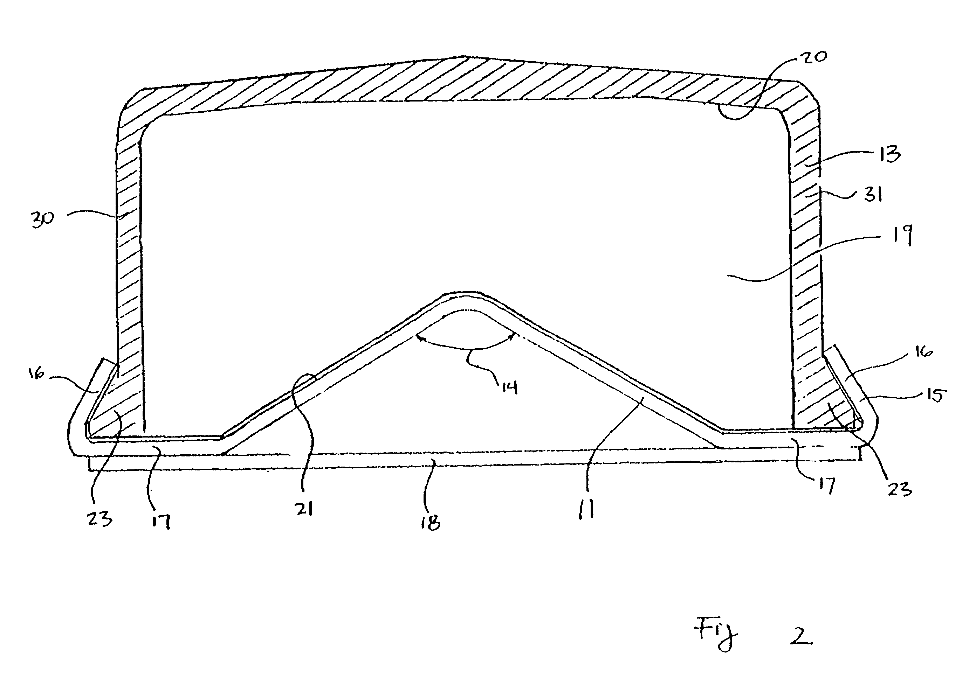

As illustrated in Figure 2, the elongated channel 11 is preferably formed from 4 mm steel plate. The plate is bent or stamped into a generally "W" shaped configuration having a central crease. This shape provides rigidity and weight savings. Without being considered essential, the angle 14 of the central crease is approximately 120°. The edges are inclined inwardly to form opposing guides 16. Flat portions 17 adjacent the guides are approximately 50 mm wide. The channel is further stiffened and reinforced by providing a plurality of straps 18 along the length of the channel extending between the flat sections 17. The straps 18 are preferably 50 mm wide and may be affixed to the channel on 500 mm centres by welding or other appropriate fastening means.

As further depicted in Figures 1 and 2, both the corner inserts 12 and the central insert 13 are formed from a polymeric, preferably urethane material having a generally "U" shaped cross-section. Either the central insert 13 or the corner inserts 12, or both may be sub-divided by interior webs 19. The webs conform to the interior cross-sectional shape defined by the interior perimeter 20 of the various inserts and the exterior surface 21 of the channel 11. The web 19 thus define a plurality of internal sub-divisions or pockets 22 within each insert.

The longitudinal edges of each insert include an enlarged portion 23, which enlarged portions are adapted to be slidably received within the guides 16 formed by the elongated channel 11. In this way, both the corner inserts 12 and central insert 13 can be slid into and out of engagement with the channel 11 as shown in Figures 1, 2 and 3.

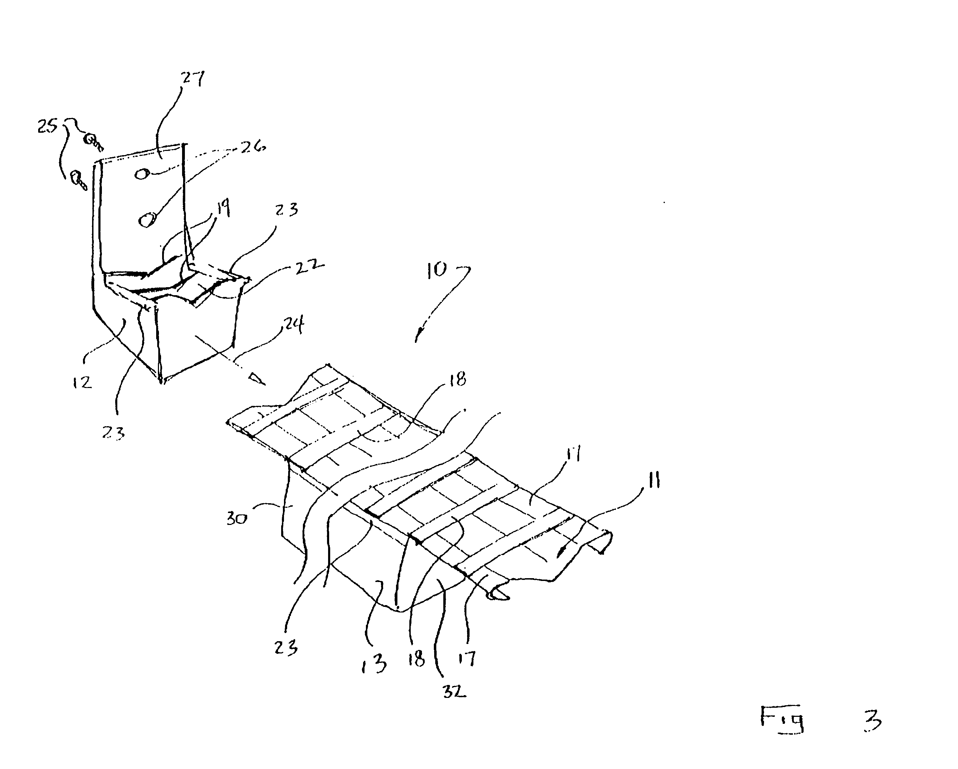

As depicted in Figure 3, the modular bumper assembly is assembled by sliding the central insert or inserts 13 into either open end of the channel 11. The enlarged portions 23 retain the insert within the channel guides 16. Similarly, the corner inserts 12 are then placed into the open ends of the channel as suggested by the arrow 24. Fasteners 25 may optionally be inserted through passage holes 26 in the relatively flat lateral ends 27 of the corner inserts. The fasteners will retain the corner inserts against the sides of the vehicle to which the modular bumper is affixed, thus maintaining the position of the corner and centre inserts in position relative to one another.

The central insert or inserts 13 may be formed of a moulding, sub-divided by a plurality of internal webs 19 and having two end walls 32. When two or more central mouldings are provided, each is sub-divided with interior webs and each includes lateral end walls 32. One particular form of alternate embodiment is suggested in Figure 1. In this embodiment, the central inserts are comprised of two similar mouldings 28. Each is sub-divided with internal webs 19 and each is terminated by a lateral end wall. A removable "U" shaped cover 29 is disposed between the separate inserts 28. The cover 29 has the same exterior cross-sectional appearance as the modules 28 but lacks interior webs 19. Owing to the operation of the enlarged edge portions 23, the rover 29 may be easily disengaged from the guides 16, thus revealing the central portion of the channel 11. In this way, a towing appliance or other device requiring access can be affixed to the channel or may be accessible through a central opening in the channel 11.

The interior webs 19 serve to rigidise the inserts to which they are attached. In addition, the air pockets 22 created between the webs 19 assist in absorbing the energy of a collison by creating pockets of compressible air. Deformation of any portion of an insert including a pocket 22 will be resisted by the air pressure within that pocket. Excessive spreading of the top and bottom sides 30, 31 of an insert is resisted by the engagement of the enlarged portion 23 of the edge with the opposed guides 16. Deformation or spreading of the channel 11 is, in part, resisted by the straps 18.

It should be appreciated from the aforesaid description, that the modular bumper 10 of the present invention provides a simple and lightweight alternative to the prior art in automotive bumpers. The inserts are strong, light and easily replaceable in sections. The corner inserts are interchangeable. The elongated channel 11 provides a simple and lightweight means of attaching the energy absorbing inserts both to one another, and to the vehicle on which they are used.

While the present invention has been described with reference to particular constructions details, configurations and materials, these should be understood as having been provided by way of example and not as a limitation to the scope of the invention.

## Claims

1. A vehicle/craft bumper characterised by an elongate metal channel (11), two polymeric corner inserts (12), a polymeric central insert (13), and by the channel having guides (16) formed along its longitudinal edges ; the inserts (12, 13) each having enlarged portions (23) along their longitudinal edges, and the guides (16) being arranged for slideably receiving the inserts (12, 13) by retaining the enlarged portions (23) of each insert.

2. A bumper as claimed in claim 1, wherein the channel is formed from a plate which is rigidised by a central longitudinal crease giving the channel a generally "W" shaped configuration in cross-section.

3. A bumper as claimed in claim 2, wherein the central crease separates flat portions (17) of the channel which extend longitudinally, the flat portions being interconnected by metal straps (18) which reinforce and stiffen the channel (11).

4. A bumper as claimed in any preceding claim, wherein the central insert (13) is subdivided by interior webs (19).

5. A bumper as claimed in claim 4, wherein the interior webs (19) define pockets (22) which, when the bumper is assembled, conform to the interior cross-section defined by the interior of the central insert and the exterior surface of the channel.

6. A bumper as claimed in any preceding claim, wherein the ends of the channel are unobstructed to the insertion of the inserts.

7. A bumper as claimed in any preceding claim, wherein the central insert comprises two or more mouldings.

8. A bumper as claimed in claim 7, wherein the central insert comprises at least two mouldings and a removable "U" shaped cover (29) engageable with the channel and disposed between two mouldings, the cover having the same external appearance as the mouldings and lacking interior webs.

9. A bumper as claimed in any preceding claims, wherein the corner inserts are subdivided by internal webs (19).

Fig 1

EP 0 439 359 A2

Fig. 2

Fig 3